# EUROPÄISCHE PATENTANMELDUNG

(11) **EP 1 168 798 A2**
(43) Veröffentlichungstag der Anmeldung: **02.01.2002**
(21) Anmeldenummer: 01108410.0
(22) Anmeldetag: 03.04.2001
(51) Int. Cl.: H04M 7/00, H04Q 3/00

(54) **Zusammenarbeit zwischen den Zeichegabeverfahren DSS1 und PSS1/QSIG bei der Übertragung von Anzeigeinformationen**

(30) Priorität: 01.07.2000 DE 10032198
(71) Anmelder: Tenovis GmbH & Co. KG, 60362 Frankfurt am Main (DE)
(72) Erfinder: Kayser, Udo, 42285 Wuppertal (DE); Pohler, Walter, 41564 Karst (DE)
(74) Vertreter: Bohnenberger, Johannes, Dr.

(57) **Zusammenfassung**

Es wird ein Verfahren zur Übertragung von Anzeigeinformationen zu Telekommunikationsendgeräten vorgeschlagen, das dazu dient, die Anzeigeinformationen, sogenannte Displayinformationen, die von DSS1-Ämtern geschickt werden, in und über PSS1/QSIG-Netze zu übertragen. Dabei werden die Displayinformationen aus den DSS1-Meldungen in PSS1/QSIG innerhalb einer neuen Display-Invoke-APDU in der auf die DSS1-Meldung folgenden PSS1/QSIG-Meldung übertragen, wobei, wenn DSS1-Meldungen das Informationselement Display aufweisen, gegebenenfalls für die Übertragung der Anzeigeinformationen eine gesonderte Meldung über PSS1/QSIG gesendet wird. Durch eine genaue Zuordnung von DSS1-Meldungen zu Meldungen nach PSS1/QSIG wird eine systematische Verarbeitung der Anzeigeinformationen erreicht.

## Beschreibung

### Stand der Technik

Die Erfindung geht aus von einem Verfahren zur Übertragung von Anzeigeinformationen zu Telekommunikationsendgeräten nach der Gattung des unabhängigen Patentanspruchs.

Es ist bereits bekannt, dass in öffentlichen Kommunikationsnetzen von DSS1-Ämtern das Informationselement Display unter anderem in den sogenannten Basic-Call-Meldungen verschickt wird. Der Inhalt des Informationselements Display kann von einem Telekommunikationsendgerät zur Anzeige gebracht werden. Beispielsweise werden in der Schweizer DSS1-Variante SN2 Gebühreninformationen im Informationselement Display übertragen, bei anderen DSS1-Ländervarianten wird bei einem fehlgeschlagen Versuch, eine Verbindung aufzubauen, die Meldung DISCONNECT um das Element Display erweitert, um einen Text, der den Grund des Fehlschlags angibt, zum rufenden Telekommunikationsendgerät zu schicken. Im Informationselement Display sind demnach Anzeigeinformationen (engl. Display Information) enthalten.

### Vorteile der Erfindung

Das erfindungsgemäße Verfahren zur Übertragung von Anzeigeinformationen zu Telekommunikationsendgeräten mit den Merkmalen des unabhängigen Patentanspruchs hat demgegenüber den Vorteil, dass die Anzeigeinformationen auch bei einem Telekommunikationsendgerät zur Anzeige gebracht werden, wenn ein Teil oder mehrere Teile des Verbindungswegs über PSS1-QSIG-Leitungen geführt werden. Damit ist die Übertragung von Display-Informationen auch innerhalb von privaten Kommunikationsnetzen möglich, die oftmals aus Telekommunikationsanlagen unterschiedlicher Hersteller aufgebaut sind, die dann über PSS1/QSIG miteinander kommunizieren. Damit werden Display-Informationen, die eine effiziente Art der Übertragung von kurzen Textinformationen darstellen, auch bei der Verwendung von dem weit verbreiteten PSS1/QSIG-Protokoll übertragen. Die Display-Informationen werden bei PSS1/QSIG in einer neuen Display-Invoke-APDU (nach ROSE-Konzept) innerhalb des Informationselementes Facility übertragen.

Durch die in den abhängigen Ansprüchen aufgeführten Maßnahmen und Weiterbildungen sind vorteilhafte Verbesserungen des im unabhängigen Patentanspruch angegebenen Verfahrens zur Übertragung von Anzeigeinformationen zu Telekommunikationsendgeräten möglich.

Besonders vorteilhaft ist, dass im PSS1/QSIG-Netz das ROSE-Konzept zur Übertragung der Anzeigeinformationen, die im DSS1-Netz im Informationselement Display übertragen werden, zur Anwendung kommt. Damit wird eine optimale Integration des neuen Merkmals innerhalb einer QSIG/PSS1-Umgebung vorteilhafterweise erreicht.

Es ist weiterhin vorteilhaft, dass die Display-Informationen in den PSS1/QSIG-Basic-Call-Meldungen wie SETUP, ALERT, CONNECT, DISCONNECT, INFORMATION, PROGRESS, NOTIFY und der APDU-Transportmeldung FACILITY mittels des Informationselements Facility übertragen werden. Dadurch wird die vorhandene Meldungsstruktur vorteilhafterweise genutzt.

Darüber hinaus ist es von Vorteil, dass bei Einzelwahl die während einer Einzelwahlphase eintreffenden Anzeigeinformationen zwischengespeichert werden, bis eine Weiterverbindung möglich ist. Bei Blockwahl werden dagegen die Display-Informationen unmittelbar weitergeleitet. Damit berücksichtigt das erfindungsgemäße Verfahren, ob Blockwahl oder Einzelwahl verwendet wird.

Darüber hinaus ist es von Vorteil, dass zwischengespeicherte Anzeigeinformationen gelöscht werden, wenn diese Anzeigeinformationen weitergeleitet werden. Dies spart Speicherressourcen in Gateways und Endanlagen (Telekommunikationsanlagen).

Ebenfalls von Vorteil ist, dass gespeicherte Display-Informationen von neu eintreffenden Display-Informationen überschrieben werden. Damit enthält das Anzeigefenster des Endgerätes nach Abruf der gespeicherten Daten nur die jeweils aktuellste Information.

Weiterhin ist es von Vorteil, dass nur bestimmte Meldungen des DSS1-Amts von einem DSS1/PSS1/QSIG-Gateway zur Übertragung von Anzeigeinformationen akzeptiert werden. Weiterhin verwendet vorteilhafterweise auch PSS1/QSIG nur bestimmte Meldungen für die Übertragung von Anzeigeinformationen, wobei feste Zuordnungen bestehen, welche PSS1/QSIG-Meldung die Display-Informationen welcher DSS1-Meldung überträgt. Durch diese systematische Relation wird ein effizientes Verfahren zur Übertragung der Anzeigeinformationen erreicht.

Vorteilhafterweise wird durch die formale Beschreibung des Identifiers und der Signalisierungsdaten ein bestimmtes Bitmuster erzeugt, das die Verwendung und Übertragung von Anzeigeinformationen eindeutig signalisiert.

Desweiteren ist es von Vorteil, das von den Telekommunikationsendanlagen bzw. Gateways, die die Display-Übertragung nicht unterstützen, die Display-Informationen ignoriert werden.

Schließlich ist es auch von Vorteil, dass zur Durchführung des erfindungsgemäßen Verfahrens ein Gateway und eine Endanlage vorliegen, um das erfindungsgemäße Verfahren zu implementieren.

### Zeichnung

Ausführungsbeispiele der Erfindung sind in der Zeichnung dargestellt und werden in der nachfolgenden Beschreibung näher erläutert. Es zeigt Figur 1 eine Kommunikationsnetzstruktur als Blockdiagramm, Figur 2 ein Flußdiagramm des erfindungsgemäßen Verfahrens, Figur 3 die PSS1/QSIG-Protokollstruktur mit dem neuen Merkmal Display, Figur 4 die Übertragung der Anzeigeinformationen, wobei der Verbindungsaufbau vom DSS1-Amt ausgeht und Figur 5 die Übertragung der Anzeigeinformationen, wobei der Verbindungsaufbau von einer Ursprungsanlage im PSS1/QSIG-Netz ausgeht.

### Beschreibung

Um Anzeigeinformationen vom öffentlichen Telekommunikationsnetz in privaten Telekommunikationsnetzen, die häufig Signalisierungen nach PSS1/QSIG verwenden, zu übertragen, werden erfindungsgemäß solche Anzeigeinformationen von Gateways, die die Schnittstelle zwischen öffentlichen und privaten Telekommunikationsnetzen bilden, in der neuen Display-Invoke-APDU ins PSS1/QSIG-Netz übertragen. Als Träger der neuen Display-Invoke-APDU wird das Informationselement Facility im PSS1/QSIG-Netz verwendet. Wenn solche Anzeigeinformationen nicht sofort weiterübertragen werden können, werden diese Anzeigeinformationen in den Gateways oder den Endanlagen zwischengespeichert. Nach der Weiterübertragung werden die gespeicherten Anzeigeinformationen gelöscht. Das Speicherverfahren arbeitet dergestalt, dass nur die jeweils letzte während der Speicherphase eintreffende Display-Information verwendet wird. Durch eine direkte Zuordnung von DSS1-Meldungen und PSS1/QSIG-Meldungen zur Übertragung von Anzeigeinformationen wird erreicht, dass eine systematische Verarbeitung von Anzeigeinformationen gewährleistet wird.

Anzeigeinformationen, Displayinformationen und Anzeigedaten werden im folgenden als Synonyme verwendet.

Eine Telekommunikationsanlage stellt eine Vorrichtung dar, die Telekommunikationsendgeräte oder ein Kommunikationsnetz an ein weiteres Kommunikationsnetz, üblicherweise ISDN, anschließt. Weiterhin weist eine Telekommunikationsanlage Mittel zur Verarbeitung von Meldungen, die über das Kommunikationsnetz übertragen werden, auf. Solche Mittel sind insbesondere Prozessoren und Speicher. Im folgenden beschreibt der Begriff Gateway die Telekommunikationsanlage, in welcher der Übergang zwischen dem öffentlichen Telekommunikationsnetz (DSS1) und dem privaten Telekommunikationsnetz (QSIG/PSS1) stattfindet. Im folgenden beschreibt der Begriff Ursprungsanlage die Telekommunikationsanlage, welche den Aufbau einer Verbindung innerhalb des privaten Telekommunikationsnetzes initiiert hat. Im folgenden beschreibt der Begriff Zielanlage die Telekommunikationsanlage, an welcher das Telekommunikationsendgerät unmittelbar beziehungsweise über eine DSS1-Amtsleitung angeschaltet ist, zu dem hin eine Verbindung aufgebaut wurde beziehungsweise wird.

ISDN (Integrated Services Digital Network) ist eine digitale Vermittlungstechnik, die alle vermittlungstechnischen Dienste (zum Beispiel Sprache, Daten, Video und Fax) in ein digitales Leitungsnetz integriert. ISDN stellt eine Schnittstelle dar, um digitale Dienste unabhängig von Leitungsart oder der Nutzung der Leitungen zu verwenden.

QSIG (Signalisierung am Q-Referenzpunkt) beziehungsweise PSS1 (Private Integrated Signalling System Number 1) ist ein Signalisierungsverfahren, das international und für den europäischen Raum standardisiert ist. QSIG und PSS1 sind Synonyme. Die Standardisierung erfolgt auf internationaler Ebene durch ISO/IEC und im europäischen Raum durch die ETSI und ECMA, wobei eine gegenseitige Harmonisierung der Standards angestrebt wird. QSIG ist offen für Hersteller von Telekommunikationsanlagen. Es ermöglicht daher insbesondere die Signalisierung und damit Kommunikation zwischen Telekommunikationsanlagen von verschiedenen Herstellern, sofern diese Telekommunikationsanlagen nach QSIG signalisieren. QSIG beziehungsweise PSS1 definieren ein ISDN (Integrated Services Digital Network) für die Teilnehmer eines privaten Kommunikationsnetzes. Folgende Standards beschreiben die grundlegende Kommunikation bei QSIG, den sogenannten basic call: ETS 300 172 Edition 3, ISO/IEC 11572 Edition 2 und ECMA 143 3^{rd} Edition. Im Standard sind die Basisfunktionen der Signalisierung definiert. Zusätzliche Funktionen (im internationalen Sprachgebrauch: Supplementary Services) nutzen zu ihrer Steuerung das standardisierte ROSE (Remote Operation Service Elements)-Konzept. Das ROSE-Konzept definiert also die Umgebung, um zusätzliche Funktionen zu realisieren. Das ROSE-Konzept findet Anwendung bei standardisierten Supplementary Services, es wird aber auch zur Steuerung herstellerspezifischer Supplementary Services eingesetzt. Im Allgemeinen definiert ROSE fünf Aktionen:
RO-Invoke: eine Operation wird durch diese Aktion aufgerufen, d. h. die Operation wird bei der Partnerinstanz, also der gerufenen Telekommunikationsanlage, ausgelöst.
RO-Result: hier wird das positive Ergebnis einer Operation gemeldet, d. h. der Aufruf der Operation ist erfolgreich.
RO-Error: diese Aktion meldet ein negatives Ergebnis einer Operation, d. h. die Operation wurde nicht ausgeführt.
RO-Reject-U: diese Aktion wird durchgeführt, wenn eine Anforderung im Fehlerfall durch den Benutzer des Dienstes abgewiesen wird.
RO-Reject-P: hier wird eine Anforderung im Fehlerfall durch den Erbringer des Dienstes abgewiesen.

Diese ROSE-Aktionen werden auf vier Protokollelemente abgebildet. Solche Protokollelemente werden im englischen als Application Protocol Data Unit (APDU) bezeichnet. Die vier Protokollelemente sind: RO-Invoke, RO-Return-Result, RO-Return-Error, RO-Reject.

Die ROSE Protokollelemente werden mittels des FACILITY-Information-Element übertragen. Das FACILITY-Information-Element wird entweder mit Basismeldungen (Meldungen, die einen Verbindungsaufbau und Verbindungsabbau steuern), wie SETUP, ALERT, CONNECT, PROGRESS oder DISCONNECT übertragen oder, falls keine Basismeldungen zur Verfügung stehen, mit der dann zu verwendenden Meldung FACILITY. Mehrere ROSE Protokollelemente können in einem FACILITY-Informationselement enthalten sein.

Unter DSS1-Amt werden in diesem Zusammenhang nicht nur die Zugänge in die Netze öffentlicher Netzbetreiber verstanden. Vielmehr bieten heutige Telekommunikationsanlage auch Schnittstellen mit DSS1-Amstfunktionalitäten an, über die wiederum andere Telekommunikationsanlagen mit ihrem DSS1-Interface angeschlossen werden. Aus diesem Grund wird hier auch das Versenden des Display-Information-Elements über DSS1-Leitungen durch private Telekommunikationsanlagen beschrieben.

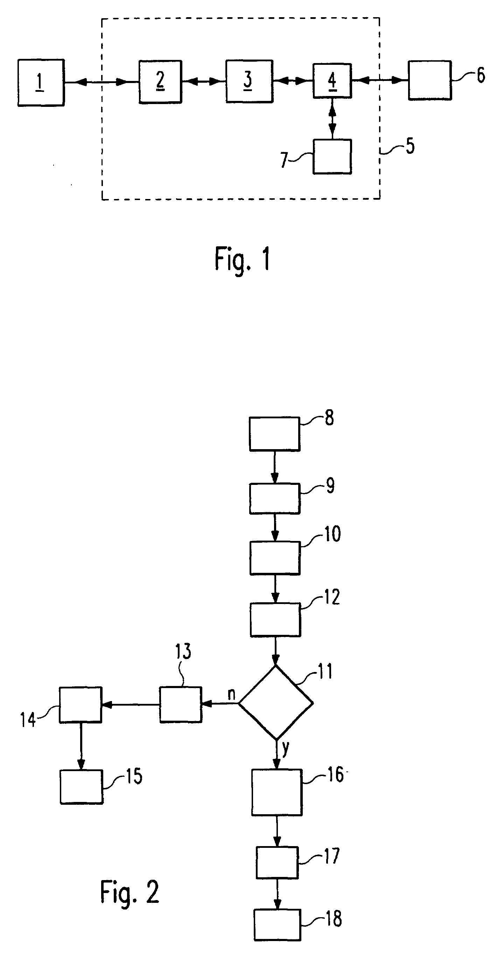

In Figur 1 ist eine Kommunikationsnetzstruktur als Blockschaltbild dargestellt. Ein DSS1-Amt 1 ist mit einem ersten Netzinterface eines Gateways 2 eines PSS1/QSIG-Netzes 5 verbunden. Neben dem Gateway 2 weist das PSS1/QSIG-Netz 5 eine Transitanlage 3, eine Telekommunikationsanlage 4, welche sowohl Gateway- als auch Endanlagenfunktionen aufweist, und ein Telekommunikationsendgerät 7 auf. Weitere Gateways, Telekommunikationsanlagen und Telekommunikationsendgeräte sind in das PSS1/QSIG-Netz 5 integrierbar.

Über ein zweites Netzinterface ist das Gateway 2 mit der Transitanlage 3 verbunden. Die Transitanlage 3 ist über ihr zweites Netzinterface mit der Telekommunikationsanlage 4 verbunden. Hier ist beispielhaft eine Transitanlage dargestellt, die die Nachrichten transparent weiter überträgt. Alternativ ist es möglich, dass keine Transitanlage oder mehr als eine Transitanlage vorliegen. An die Telekommunikationsanlage 4 ist weiterhin das Telekommunikationsendgerät 7 angeschlossen. Die Telekommunikationsanlage 4 weist die Funktionalitäten einer Telekommunikationsendanlage und die eines Gateways auf. In Abhängigkeit davon, ob ein Endgerät oder eine Amtsleitung von der Telekommunikationsanlage 4 mit der QSIG-Leitung verbunden werden, entscheidet die Telekommunikationsanlage 4 individuell für jede Verbindung neu, welche Funktionen einzusetzen sind. Die Telekommunikationsanlage 4 ist über ihr zweites Netzinterface mit einem zweiten DSS1-Amt 6 verbunden. Die DSS1-Ämter 1 und 6 repräsentieren öffentliche Telekommunikationsnetze.

In Figur 2 ist das erfindungsgemäße Verfahren zur Übertragung von Informationen zu Telekommunikationsendgeräten dargestellt. In Verfahrensschritt 8 überträgt das DSS1-Amt 1 eine Anzeigeinformation in dem Informationselement Display mit einer Basic-Call-Meldung zu dem Gateway 2 des PSS1/QSIG-Netzes 5.

In Verfahrensschritt 9 wertet das Gateway 2 die Basic-Call-Meldung des DSS1-Amts 1 aus. In Verfahrensschritt 10 werden dann diese Anzeigeinformationen durch das Gateway 2 innerhalb der neuen Display-Invoke-APDU über die PSS1/QSIG-Leitung übertragen, wobei eine feste Zuordnung zwischen der DSS1-Meldung besteht, in der die Anzeigeinformation empfangen wurde, und der QSIG-Meldung, in welcher die Informationen weitertransportiert werden. Jedoch sind nicht alle PSS1/QSIG-Meldungen für die Übertragung der Anzeigeinformationen geeignet. Obwohl QSIG und DSS1 eng verwandte Protokolle sind und mit wenigen Ausnahmen die selben Meldungen verwenden, ist eine unmittelbare Zuordnung nicht möglich. So können z.B. die Meldungen SETUP_ACK und CALL_PROCEEDING in DSS1 eine Display-Information enthalten, in QSIG ist aber in den Meldungen SETUP_ACK und CALL_PROCEEDING das Informationselement Facility, welches Träger von ROSE-APDUen ist, nicht erlaubt. In solchen Fällen wird eine zusätzliche FACILITY-Meldung der betreffenden Basic-Call-Meldung auf der PSS1/QSIG-Leitung nachgesandt. Dabei wird die Anzeigeinformation aus dem Informationselement Display des DSS1-Amtes 1 in die neue Display-Invoke-APDU innerhalb des Informationselementes Facility nach PSS1/QSIG transformiert.

Im folgenden werden die Relationen dargestellt, welche PSS1/QSIG-Meldungen Träger der Display-Informationen von welchen DSS1-Meldungen sind, um die Anzeigeinformationen im Informationselement Facility zu übertragen. Dabei ist zu beachten, dass für manche PSS1/QSIG-Meldungen das Informationselement Facility, mit dem die Anzeigeinformationen übertragen werden, nicht zulässig ist. Dann wird beispielsweise bei SETUP_ACKNOWLEDGE und CALL_PROCEEDING eine Facility-Meldung mit den Anzeigeinformationen diesen Meldungen jeweils nachgeschickt.

Die Display-Informationen aus der DSS1-Meldung Alert werden in der PSS1/QSIG-Meldung Alert oder Progress transportiert. Die Display-Informationen aus der DSS1-Meldung Call_Proceeding oder aus der DSS1-Meldung Setup_Acknowledge werden in der PSS1/QSIG-Meldung Facility transportiert. Die Display-Informationen aus der DSS1-Meldung Connect werden in der PSS1/QSIG-Meldung Connect transportiert. Die Display-Informationen aus der DSS1-Meldung Disconnect werden in der PSS1/QSIG-Meldung Progress oder Disconnect transportiert. Die Display-Informationen aus der DSS1-Meldung Progress werden in der PSS1/QSIG-Meldung Progress transportiert. Die Display-Informationen aus der DSS1-Meldung Notify werden in der PSS1/QSIG-Meldung Notify oder Facility transportiert. Die Display-Informationen aus der DSS1-Meldung Setup werden in der PSS1/QSIG-Meldung Setup transportiert. Die Display-Informationen aus der DSS1-Meldung Information werden entweder in der PSS1/QSIG-Meldung Facility oder Information transportiert. Die Display-Informationen aus der DSS1-Meldung Connect_Acknowledge werden in der PSS1/QSIG-Meldung Facility transportiert. Die Display-Informationen aus der DSS1-Meldungen Status oder Status_ENQ werden in der PSS1/QSIG-Meldung Facility transportiert.

Die Telekommunikationsanlage 4 führt dann die entsprechenden umgekehrten Aktionen durch, beispielsweise werden die Anzeigeinformationen der Display-Invoke-APDU entnommen und z.B. im Informationselement Display einem angeschalteten Telekommunikationsendgerät übermittelt.

In Verfahrensschritt 10 wird dann die Einfügung der Display-Invoke-APDU innerhalb des Facility-Informationselements in die entsprechende Meldung nach PSS1/QSIG für die Übertragung vorgenommen. In Verfahrensschritt 12 wird die in der Meldung enthaltenen Anzeigeinformation von der Transittelekommunikationsanlage 3 transparent weiterübertragen und zwar zur Telekommunikationsanlage 4. In Verfahrensschritt 11 werden in der Telekommunikationsanlage 4 die Display-Informationen der Display-Invoke-APDU entnommen, und es wird überprüft, ob das Ziel für die Anzeigeinformation bereits bekannt ist. Ist das Ziel noch nicht bekannt, z.B. in bestimmten Phasen der Einzelwahl, so werden die Display-Informationen zwischengespeichert, wobei ggf. bereits gespeicherte Display-Informationen mit der neuen Information überschrieben werden (Wahrung der Aktualität). Ist das Ziel bekannt und ist das Ziel eine DSS1-Amtsleitung, so werden die Gateway-Funktionalitäten der Telekommunikationsanlage 4 aktiviert. Die Anzeigeinformation wird dann wieder in das Informationselement Display übernommen. In Verfahrensschritt 14 wird diese Übernahme vorgenommen, um in Verfahrensschritt 15 dann von der Telekommunikationsanlage 4 zu dem zweiten DSS1-Amt 6 übertragen zu werden. Dies gilt vorbehaltlich, dass dieses DSS1-Amt 6 den Empfang von Display-Informationen unterstützt. Gegebenenfalls werden bereits gespeicherte Display-Informationen ohne vorherige Übertragung gelöscht.

Ist in Verfahrensschritt 11 festgestellt worden, dass das Ziel der Basic-Call-Meldung vom DSS1-Amt 1 das Telekommunikationsendgerät 7 im PSS1/QSIG-Netz 5 ist, dann wird in Verfahrensschritt 16 die mit dem Telekommunikationsendgerät 7 verbundene Telekommunikationsanlage 4 als Telekommunikationsendanlage aktiv und die Auswertung der von der Transitanlage 3 an die Telekommunikationsanlage 4 übertragenen Basic-Call-Meldungen vorgenommen, um dann in Verfahrensschritt 17 die Anzeigeinformationen aus dem Informationselement Facility dem Telekommunikationsendgerät 7 zu übertragen. In Verfahrensschritt 18 stellt das Telekommunikationsendgerät 7 mittels Mitteln zur Darstellung die Anzeigeinformation dar. Solche Mittel zur Darstellung sind beispielsweise ein- oder mehrzeilige Flüssigkristall- oder Plasmadisplays.

Wird die DSS1-Meldung Setup von dem Gateway 2 empfangen, so wird zuerst geprüft, ob die Wahlinformationen für eine Weitervermittlung ausreichen. Ist dies der Fall und wird die Verbindung zu einer QSIG-Leitung des Gateways 2 weitervermittelt, dann werden auf der QSIG-Leitung die Anzeigeinformationen innerhalb der neuen Display-Invoke-APDU im Informationselement Facility mit der Meldung Setup versendet. Ist die Wahlinformation hingegen nicht ausreichend, z. B. in vielen Einzelwahlfällen, ist ein Zwischenspeichern der Anzeigeinformationen auf der Seite der DSS1-Leitung des Gateways 2 erforderlich. Bis zur möglichen Weitervermittlung werden weiterhin in INFORMATION-Meldungen eintreffende Anzeigeinformationen zwischengespeichert, wobei die bereits gespeicherten Informationen mit den neuen Informationen überschrieben werden. Ist die Wahlinformation schließlich ausreichend zur Weitervermittlung und soll eine QSIG-Leitung belegt werden, so werden die zuletzt empfangenen Display-Informationen über die QSIG-Leitung übertragen. Handelt es sich dabei um gespeicherte Display-Informationen, die in der Meldung SETUP empfangen wurden, so werden diese mit der Meldung SETUP auf der QSIG-Leitung übertragen; handelt es sich jedoch um Display-Informationen, die in einer Meldung INFORMATION empfangen wurden, so werden diese nach Belegung der QSIG-Leitung in der Meldung FACILITY übertragen und zwar in beiden Fällen in der neuen Display-Invoke-APDU im Informationselement Facility. Auf Seiten der DSS1-Leitung gespeicherte Display-Informationen werden gelöscht. Ist nach Belegung der QSIG-Leitung die Wahl noch nicht abgeschlossen, so werden weitere Display-Informationen, die in dieser Phase in der Meldung INFORMATION auf der DSS1-Leitung eintreffen, auf der QSIG-Leitung in der neuen Display-Invoke-APDU im Informationselement Facility übertragen.

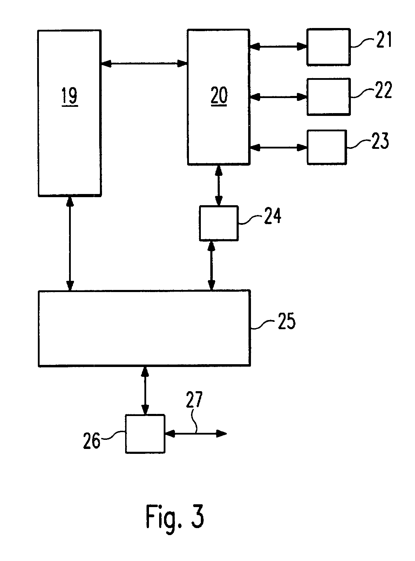

In Figur 3 ist die PSS1/QSIG-Protokollstruktur mit dem neuen Merkmal Display 22 dargestellt. Die erfindungsgemäße Dispaly-Funktion (SS[Supplementary Service]-Control for Display) 22 ist mit einem Koordinationsprozess (Coordination Function) 20 verbunden, über den die Display-Funktion 22 die Dienste von ROSE 23 nutzt. Die Koordinationsfunktion 20 ist weiterhin mit der GFT (Generic Functional Transport Control)-Kontrolle 24 verbunden.

Die GFT-Kontrolle 24 zeigt zwei Arten von Diensten. Zum einen die Transportdienstleistung für Protokollelemente zwischen Funktionen, die auf verschiedenen Telekommunikationsanlagen ablaufen, und zum anderen den Aufbau und den Abbau von Verbindungen ohne Nutzkanalbelegung, das sind Signalisierungsverbindungen. Die GFT-Kontrolle 24 ist mit einer Protokollkontrolle (Protocol Control) 25 verbunden, die die Übertragung von Protokollelementen zwischen benachbarten Telekommunikationsanlagen leistet und den Aufbau und Abbau von Signalisierungsverbindungen zwischen benachbarten Telekommunikationsanlagen. Auch die Rufkontrolle (Call Control) 19 ist mit der Koordinationsfunktion 20 und der Protokollkontrolle 25 verbunden. Die Protokollkontrolle 25 übergibt beziehungsweise empfängt Daten. Der Signalisierungsmechanismus 26 gibt dann die Meldungen auf die Leitung 27 oder empfängt sie von der Leitung 27.

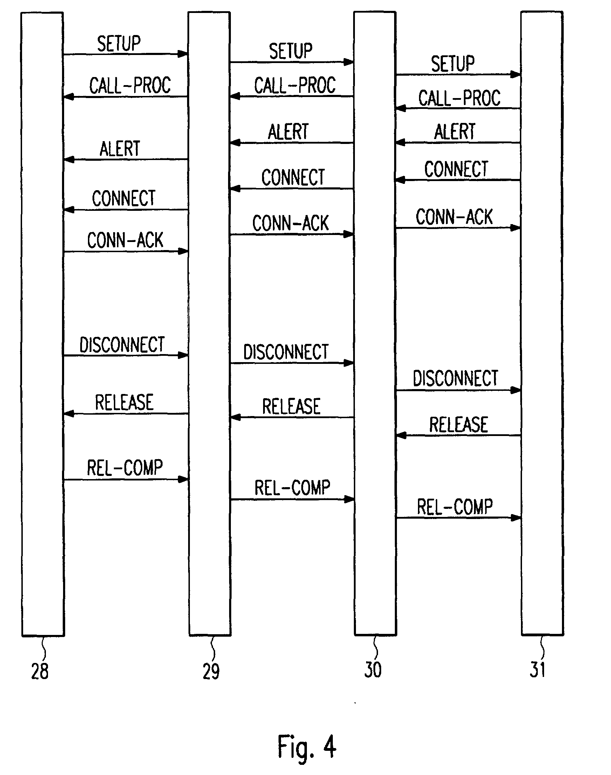

In Figur 4 ist die Übertragung der Anzeigeinformationen schematisch dargestellt, wobei der Verbindungsaufbau vom DSS1-Amt 28 ausgeht. Die Verbindung wird in Blockwahl aufgebaut, d.h. in der Meldung SETUP sind alle Wahlziffern enthalten, um das Ziel zu erreichen. Ein Zwischenspeichern von Display-Informationen ist nicht nötig. Das DSS1-Amt 28 versendet eine Setup-Meldung mit Anzeigeinformationen zu einem Gateway 29. Da das Gateway 29 die Vollständigkeit der Wahl erkennt, antwortet es unmittelbar mit der Meldung CALL_PROCEEDING zum DSS1-Amt 28. Das Gateway 29 schickt daraufhin eine Setup-Meldung mit den Anzeigeinformationen, nun aber wie oben dargestellt, in der neuen Display-Invoke-APDU im Informationselement Facility zu einer Transitanlage 30. Da auch die Transitanlage 30 die Vollständigkeit der Wahl erkennt, antwortet sie unmittelbar mit der Meldung CALL_PROCEEDING zum Gateway 29. Die Transitanlage 30 überträgt das in der Setup-Meldung enthaltene Facility-Informationselement mit den Anzeigeinformationen transparent zu der Zielanlage 31. Die Zielanlage 31 antwortet auf die Setup-Meldung mit der Meldung Call_Proceeding. Keine der Meldungen CALL_PROCEEDING enthält Anzeigeinformationen. Die Zielanlage 31 schickt dann über die Transitanlage 30 die Meldungen Alert und Connect zum Gateway 29, wobei sowohl die Transitanlage 30 als auch das Gateway 29 auf den Empfang unmittelbar mit der Meldung Connect_Acknowledge antworten.

Wenn die Verbindung dann vom Teilnehmer im öffentlichen Netz ausgelöst wird, sendet das DSS1-Amt 28 die Meldung Disconnect mit Anzeigeinformationen im Informationselement Display. Das Gateway 29 schickt ebenfalls eine DISCONNECT-Meldung nach PSS1/QSIG mit den Anzeigedaten in der neuen Display-Invoke-APDU im Informationselement an die Transitanlage 30. Die Transitanlage 30 überträgt wiederum die Meldung Disconnect ohne Veränderungen an den Inhalten dieses Facility-Informationselements zu der Zielanlage 31, die gegebenenfalls die Anzeigeinformationen in der Meldung Disconnect zu einem Telekommunikationsendgerät weiterüberträgt, das dann diese Anzeigeinformationen darstellt. Sowohl die Transitanlage 30 als auch die Zielanlage 31 antworten auf den Empfang der Meldung DISCONNECT unmittelbar mit der Meldung RELEASE, die ebenfalls unmittelbar mit RELEASE_COMPLETE beantwortet wird. Das Gateway 29 versendet dann die DSS1-Meldung Release zum DSS1-Amt 29, das daraufhin mit der Meldung Release Complete antwortet, so dass dann die Verbindung endgültig ausgelöst ist.

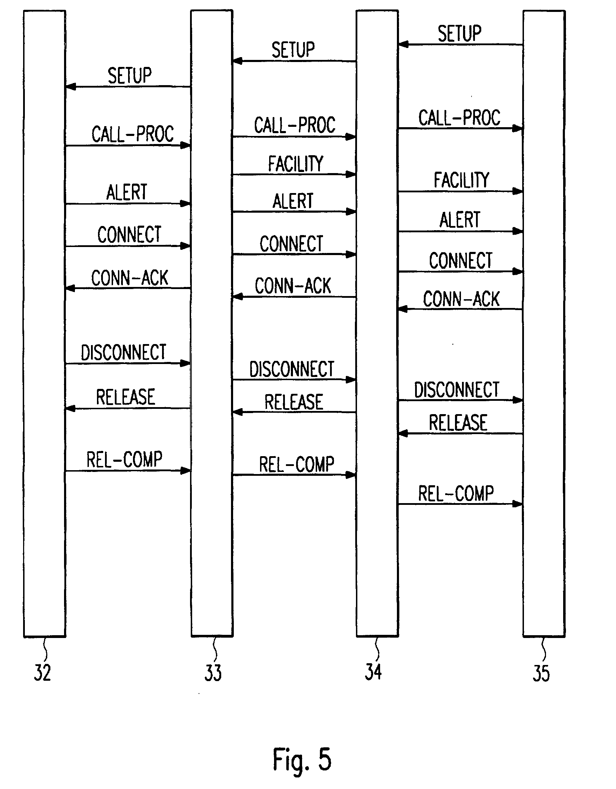

In Figur 5 wird schematisch die Übertragung der Anzeigeinformation dargestellt, wobei der Verbindungsaufbau von unmittelbar an eine Telekommunikationsanlage im PSS1/QSIG-Netz 5 angeschlossenen Telekommunikationsendgerät ausgeht. Die Verbindung wird in Blockwahl aufgebaut. Eine Ursprungsanlage 35 versendet die Meldung Setup zu einer Transitanlage 34, welche den Empfang der Meldung SETUP unmittelbar mit der Meldung CALL_PROCEEDING beantwortet. Die Transitanlage 34 schickt ihrerseits eine SETUP-Meldung zum Gateway 33, welches den Empfang der Meldung SETUP ebenfalls mit der Meldung CALL_PROCEEDING beantwortet. Das Gateway 33 schickt danach eine Meldung SETUP zum DSS1-Amt 32, woraufhin das DSS1-Amt 32 mit einer Meldung Call_Proceeding mit Anzeigeinformationen antwortet, die zum Gateway 33 übertragen wird.

Da die Meldung Call_Proceeding des DSS1-Amtes 32 Anzeigeinformationen aufweist, schickt das Gateway 33 eine Facility-Meldung zur Transitanlage 34, welche die Anzeigeinformation in der neuen Display-Invoke-APDU im Informationselement Facility aufweist. Die Inhalte der Meldung Facility werden transparent zu der Ursprungsanlage 35 durch die Transitanlage 34 übertragen. Das DSS1-Amt 32 versendet dann die Meldung Alert mit einer weiteren Anzeigeinformation zu dem Gateway 33, das daraufhin eine Meldung Alert nach PSS1/QSIG mit der Anzeigeinformation in der neuen Display-Invoke-APDU im Informationselement Facility über die Transitanlage 34 zu der Ursprungsanlage 35 versendet. Dann versendet das DSS1-Amt die Meldung Connect wiederum mit einer Anzeigeinformation im Informationselement Display. Das Gateway 33 reagiert auf die Meldung Connect mit einer Meldung Connect nach PSS1/QSIG, wobei die Meldung Connect im Informationselement Facility die Anzeigeinformationen in der neuen Display-Invoke-APDU aufweist. Die Meldung Connect mit den Anzeigeinformationen wird dann über die Transitanlage 34 zu der Ursprungsanlage 35 übertragen. Auf den QSIG-Leitungen wird der Empfang der Meldung CONNECT unmittelbar mit der Meldung CONNECT_ACK beantwortet.

Bei Auslösung der Verbindung durch den Teilnehmer im öffentlichen Netz versendet das DSS1-Amt 32 eine Meldung Disconnect mit Anzeigeinformationen im Informationselement Display. Das Gateway 33 reagiert darauf mit der Meldung Disconnect nach PSS1/QSIG, wobei die Meldung Disconnect im Informationselement Facility die Anzeigeinformationen in der neuen Display-Invoke-APDU aufweist. Das in der Meldung DISCONNECT enthaltene Facility-Informationselement wird dann transparent von der Transitanlage 34 zur Ursprungsanlage 35 übertragen. Auf den QSIG-Leitungen wird der Empfang der Meldung DISCONNECT sowohl von der Ursprungsanlage als auch von der Transitanlage unmittelbar mit der Meldung RELEASE beantwortet. Der Empfang einer Meldung RELEASE wird auf den QSIG-Leitungen ebenfalls unmittelbar mit der Meldung RELEASE_COMPLETE beantwortet. Auch zum DSS1-Amt wird eine Meldung RELEASE geschickt, das ebenfalls mit RELEASE_COMPLETE antwortet.

Ein Gateway ist hier so aufgebaut, dass es zusätzlich zu den von PSS1/QSIG vorgegebenen Gateway-Funktionen auch die Umsetzung der Anzeigeinformationen zwischen DSS1 und PSS1/QSIG unterstützt.

Tabelle 1 beschreibt formal die Inhalte der Display-Signalisierung in der QSIG üblichen Form. Mit dieser formalen Beschreibung in ASN.1 ist über die Codierregeln (Basic Encoding Rules) unmittelbar das Binärmuster festgelegt. Die formale Definition legt jedoch nicht nur den Inhalt der Signalisierung fest, sondern auch einen sogenannten Identifier, der diese Signalisierungsinformation innerhalb von QSIG eindeutig kennzeichnet. Der Identifier findet sich in der letzten Zeile wieder: displayinfo DisplayInfo::={boschqsigext Display-info(112)}.

Alle Zeilen, die mit Import beginnnen, bedeuten, dass Definitionen aus dem QSIG-Standard übernommen werden. Die Zeile, die mit Boschqsigext beginnt, bedeutet, dass der firmenspezifische Object-Identifier für QSIG-Anwendungen der firmenspezifischen Telekommunikationsanlage festgelegt wird. Die Zeilen, die mit DisplayInfo beginnen und vor der Zeile beginnend mit DisplayInfoElem enden, definieren die neue ROSE-Operation für die Display-Signalisierung. Die Zeile mit *display-info-elem [PRIVATE 0]IMPLICIT DisplayInfoElem* definiert die Display-Daten innerhalb der neuen Operation. Die Zeile

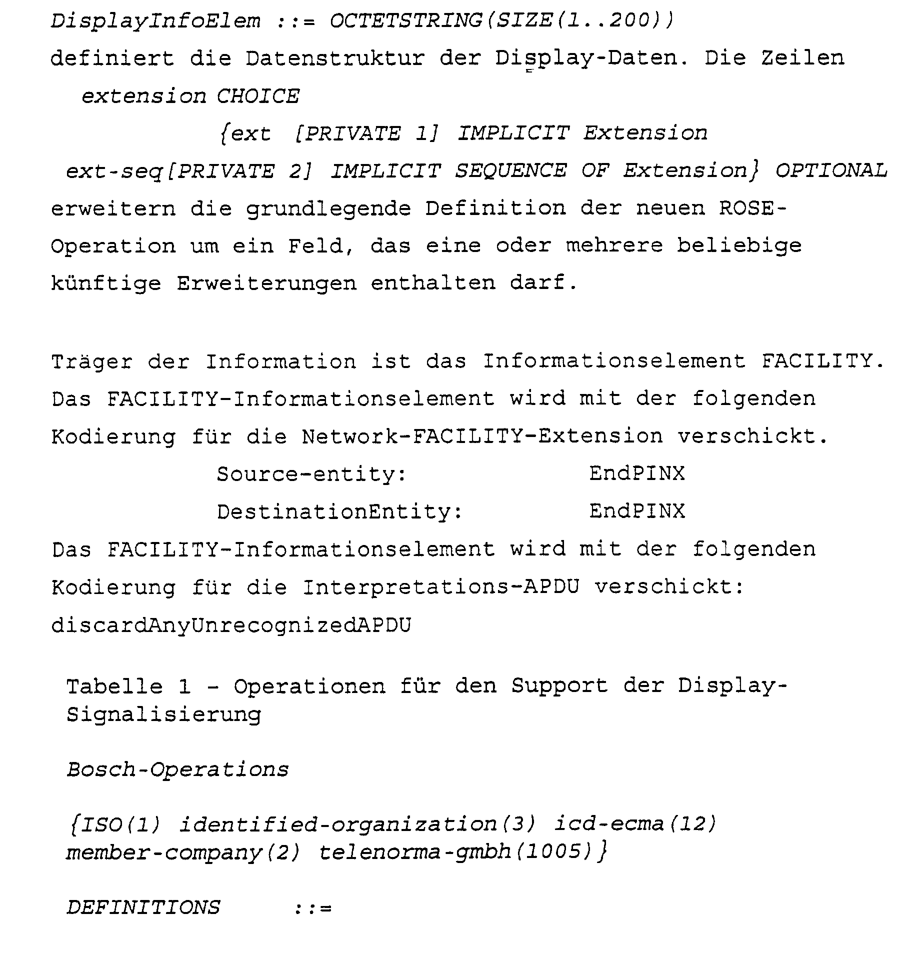

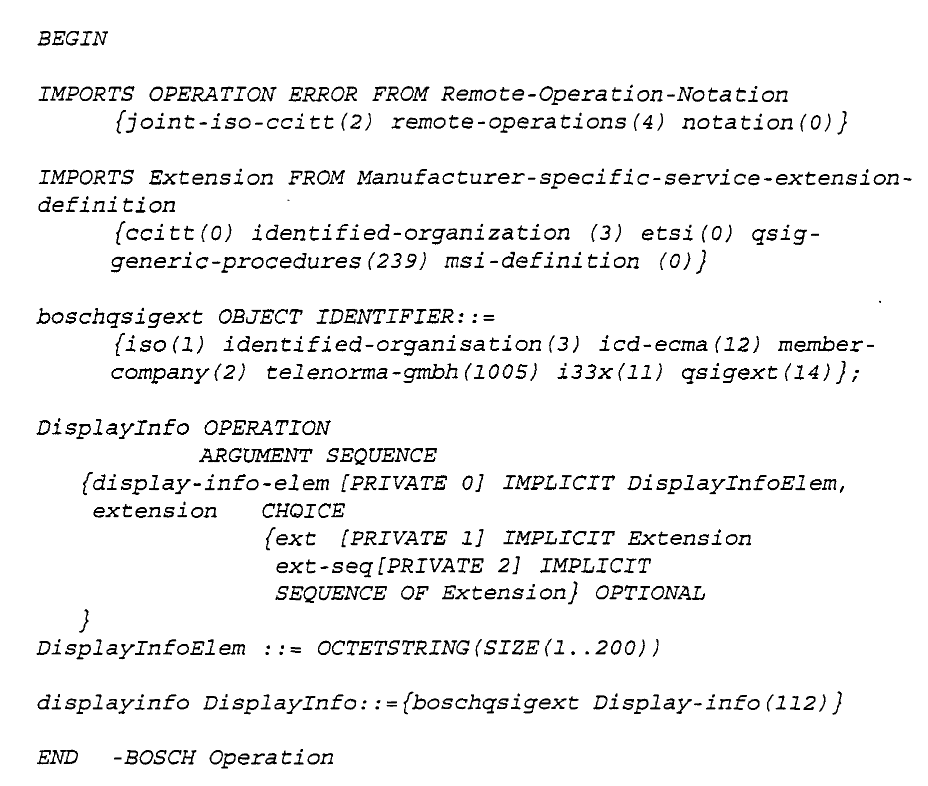

## Patentansprüche

1. Verfahren zur Übertragung von Anzeigeinformationen zu Telekommunikationsendgeräten, wobei die Anzeigeinformationen über Gateways (2, 4) übertragen werden, wobei die Gateways (2, 4) ein privates Telekommunikationsnetz (5) mit DSS1-Ämtern (1, 6) verbinden, wobei die Übertragung der Informationen zwischen Telekommunikationsanlagen (2, 3, 4), die das private Telekommunikationsnetz (5) bilden, mittels PSS1/QSIG erfolgt, wobei an die Telekommunikationsanlagen (2, 3, 4) die Telekommunikationsendgeräte angeschlossen werden, wobei die Anzeigeinformationen von den DSS1-Ämtern im Informationselement Display empfangen beziehungsweise übertragen werden, **dadurch gekennzeichnet, dass** die Anzeigeinformationen im Informationselement Facility in einer neuen Display-Invoke-APDU im privaten Telekommunikationsnetz (5) übertragen werden.

2. Verfahren nach Anspruch 1, **dadurch gekennzeichnet, dass** die Anzeigeinformationen mittels PSS1/QSIG im Informationselement Facility in einer neuen Display-Invoke-APDU übertragen werden.

3. Verfahren nach Anspruch 2, **dadurch gekennzeichnet, dass** Anzeigeinformationen, die in den Gateways (2, 4) zwischengespeichert werden, nach ihrer Weiterübertragung gelöscht werden.

4. Verfahren nach Anspruch 3, **dadurch gekennzeichnet, dass** bereits gespeicherte Anzeigeinformationen durch neu empfangene Anzeigeinformationen überschrieben werden.

5. Verfahren nach Anspruch 3 oder 4, **dadurch gekennzeichnet, dass** im DSS1-PSS1/QSIG-Gateway die Meldungen ALERT, CALL_PROC, CONNECT, CONNECT ACKNOWLEDGE, DISCONNECT, FACILITY, INFORMATION, NOTIFY, PROGRESS, SETUP, SETUP_ACK, STATUS und STATUS_ENQUIRY von DSS1 zur Übertragung von den Anzeigeinformationen akzeptiert werden.

6. Verfahren nach einem der vorhergehenden Ansprüche, **dadurch gekennzeichnet, dass** auf der PSS1/QSIG-Leitung die Meldungen FACILITY, SETUP, DISCONNECT, PROGRESS, NOTIFY und ALERT zur Übertragung der Anzeigeinformationen in der neuen Display-Invoke-APDU im Informationselement Facility verwendet werden.

7. Verfahren nach Anspruch 5 und 6, **dadurch gekennzeichnet, dass** die Anzeigeinformationen, die das Gateway (2, 4) in der DSS1-Meldung ALERT empfängt, in PSS1/QSIG in den Meldungen ALERT oder PROGRESS übertragen werden, dass die Anzeigeinformationen, die das Gateway (2, 4) in der DSS1-Meldung CALL_PROCEEDING oder SETUP_ACKNOWLEDGE empfängt, in PSS1/QSIG in der Meldung Facility übertragen werden, dass die Anzeigeinformation, die das Gateway (2, 4) in der DSS1-Meldung DISCONNECT empfängt, in PSS1/QSIG in der Meldung DISCONNECT übertragen werden, dass die Anzeigeinformationen, die das Gateway (2, 4) in der DSS1-Meldung CONNECT empfängt, in PSS1/QSIG in der Meldung CONNECT übertragen werden, dass die Anzeigeinformationen, die das Gateway (2, 4) in der DSS1-Meldung PROGRESS empfängt, in PSS1/QSIG in der Meldung PROGRESS übertragen werden, dass die Anzeigeinformationen, die das Gateway (2, 4) in der DSS1-Meldung NOTIFY empfängt, in PSS1/QSIG in den Meldungen NOTIFY oder FACILITY übertragen werden, dass die Anzeigeinformationen, die das Gateway (2, 4) in der DSS1-Meldung SETUP empfängt, in PSS1/QSIG in der Meldung SETUP übertragen werden, dass die Anzeigeinformationen, die das Gateway (2, 4) in der DSS1-Meldung INFORMATION empfängt, in PSS1/QSIG in den Meldungen FACILITY oder INFORMATION übertragen werden, dass die Anzeigeinformationen, die das Gateway (2, 4) in der DSS1-Meldung CONNECT_ACKNOWLEDGE empfängt, in PSS1/QSIG in der Meldung FACILITY übertragen werden, und dass die Anzeigeinformationen, die das Gateway (2, 4) in der DSS1-Meldung STATUS oder STATUS_ENQ empfängt, in PSS1/QSIG in der Meldung FACILITY übertragen werden.

8. Verfahren nach einem der vorhergehenden Ansprüche, **dadurch gekennzeichnet, dass** für den Identifier folgende formale Beschreibung verwendet wird:

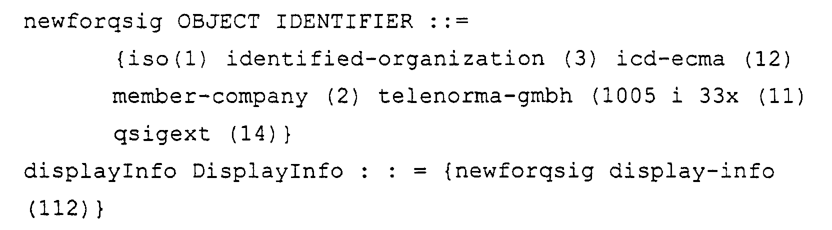

9. Verfahren nach Anspruch 8, **dadurch gekennzeichnet, dass** für die Signalisierungsdaten für die Übertragung der Anzeigeinformationen folgende formale Beschreibung verwendet wird:

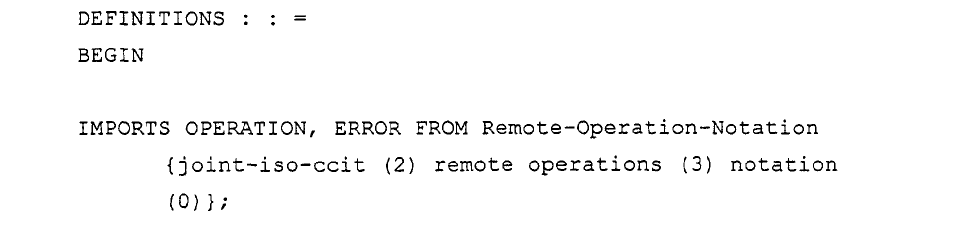

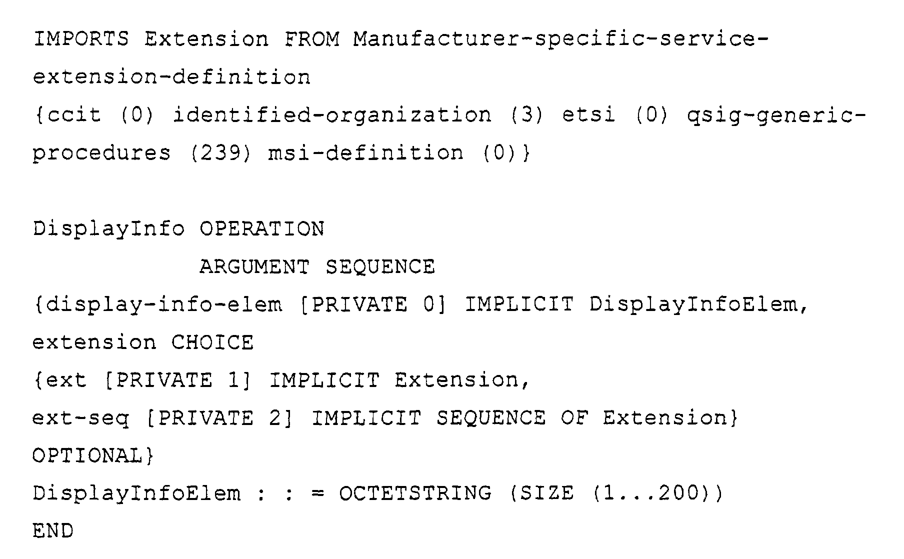

10. Gateway zur Durchführung des Verfahrens nach einem der Ansprüche 1 bis 9, **dadurch gekennzeichnet, dass** das Gateway einen Prozessor zur Durchführung des Verfahrens und einen Speicher zur Speicherung der Anzeigeinformationen aufweist.

11. Telekommunikationsanlage zur Durchführung des Verfahrens nach einem der Ansprüche 1 bis 9, **dadurch gekennzeichnet, dass** die Telekommunikationsanlage Mittel zur Durchführung des Verfahrens aufweist.
